# EUROPEAN PATENT APPLICATION

(11) **EP 4 633 059 A1**
(43) Date of publication of application: **15.10.2025**
(21) Application number: 24169495.9
(22) Date of filing: 10.04.2024
(51) Int. Cl.: H04B 7/185, H04B 7/204

(54) **METHOD, COMPUTER PROGRAM, APPARATUS, AND SATELLITE FOR WIRELESS DATA COMMUNICATION IN A COMMUNICATION SYSTEM**

(71) Applicant: Deutsche Telekom AG, 53113 Bonn (DE)
(72) Inventor: BREITBACH, Johannes Markus, 53227 Bonn (DE); BRITSCH, Matthias, 53639 Königswinter (DE); RASS, Jörg, 50859 Köln (DE); SCHATZMAYR, Rainer, 53229 Bonn (DE)
(74) Representative: 2SPL Patentanwälte PartG mbB

(57) **Abstract**

Examples relate to a method, a computer program, an apparatus and a satellite for wireless data communication in a communication system. The method (10) for wireless data communication in a communication system comprises forming (12) two or more antenna beams covering two or more different regions, wherein at least two adjacent antenna beams partially overlap and cover an overlapping region. The method (10) further comprises assigning (14) orthogonal radio resources to the two or more antenna beams to enable data communication. In the overlapping region at least orthogonal radio resources of two antenna beams are available for data communication.

## Description

### Field

Examples relate to a method, a computer program, an apparatus and a satellite for wireless data communication in a communication system, more particularly, but not exclusively, to a concept for using overlapping antenna beams to enhance capacity in a wireless communication system.

### Background

Communication satellites such as those in the Starlink, OneWeb or Kuiper, use satellite constellations, which are equipped with electronically steerable phased array antennas. This enables the use of the available radio spectrum in spatially separated areas independently of each other by means of beamforming (so-called spatial re-use). These areas are referred to below as footprint, coverage or illumination regions and typically have a diameter of several tens of kilometers.

Technically speaking, beamforming on board satellites can be realized with phased array antennas in the same way as with stationary antennas on the ground. However, due to the greater distance between the antenna array and the terminal devices, there are differences in the application of beamforming between satellites and terrestrial antennas.

In the terrestrial case, an antenna array uses a frequency band for a radio cell. Within this radio cell, several beams are emitted in different directions in order to use the frequency band several times and increase the overall data rate through this spatial reuse. With electronically steerable antenna arrays, the beams can also be dynamically tracked to the terminals when they move within the radio cell (see e.g. O-RAN.WG4.CUS.0-R003-v14.00, "Channel-Information-based beamforming" in [O-RAN Working Group 4, Control, User and Synchronization Plane Specification, Section 12.4.1]).

The beams, which are emitted from an antenna array on board a satellite towards the ground, illuminate regions of several 10 km in diameter due to the high satellite altitude above the ground. It is therefore no longer possible to align the beams to individual end devices with realistic antenna sizes. Instead, each beam represents its own radio cell. This allows the satellite to generate several radio cells on the ground with a single antenna. Electronically controllable beamforming makes it possible to dynamically change the beam direction so that the centers of the beams or illumination regions remain stationary during the entire overflight of the satellite (so-called ground-fixed beams or earth-fixed beams).

In order to better adapt the transmission capacity of the individual beams to the requirements in the coverage regions and to improve the utilization of the satellite capacity, a beam hopping, e.g. https://www.iis.fraunhofer.de/de/ff/kom/satkom/hts/beam-hopping.html, procedure switches beams between coverage regions on the ground according to a fixed schedule. This is effectively a time multiplex between the individual coverage regions, whereby the time periods for which a beam is allocated to the coverage regions can vary in length depending on the volume of traffic in these regions.

This method is well suited for satellites that emit few, highly focused beams: The strong focusing ensures a high antenna gain and therefore good signal reception. The small number of beams keeps the effort for signal processing and data transport on the feeder link low, but also limits the overall transmission capacity. However, the procedure might not be suitable for mobile radio applications, as with beam hopping the radio coverage in the individual coverage regions is repeatedly interrupted while other regions are covered, whereas in mobile radio, radio cells are covered without interruption.

### Summary

It is a finding of the present disclosure that the capacity of a beam pattern can be enhanced by assigning orthogonal radio resources to the beams and then overlap the beams. In the overlapping region capacity from multiple beams is made available and interference is avoided in the overlapping region through assignment of the orthogonal radio resources. The overlapping of the beams can be achieved by electronically steering the beams accordingly.

Examples provide a method for wireless data communication in a communication system. The method comprises forming two or more antenna beams covering two or more different regions. At least two adjacent antenna beams partially overlap and cover an overlapping region. The method further comprises assigning orthogonal radio resources to the two or more antenna beams to enable data communication. In the overlapping region at least orthogonal radio resources of two antenna beams are available for data communication. Thereby, examples may increase transmission capacity of the communication system.

For example, the method is used in a satellite communication system and may enhance capacity of satellite communication systems. In examples, the orthogonal radio resources may be different subcarriers or physical resource blocks of an orthogonal frequency division multiplexing system and/or different orthogonal codes of a code division multiplexing system. Examples may enable orthogonalization of the signals communicated through the overlapping beams in the time, frequency, polarization or code domain.

At least a quarter of a region covered by an antenna beam of a first beam subgroup may overlap with a region covered by an adjacent antenna beam of a second beam subgroup. Antenna beams may be organized in subgroups and the beams of the subgroups may overlap. For example, the subgroups are assigned orthogonal radio resources such that one group is orthogonal to another. A size of the overlapping region may be larger than a quarter of the size of a region covered an antenna beam. In further examples the method may further comprise communicating with an end user in the overlapping region simultaneously using the adjacent antenna beams and the orthogonal radio resources. In the overlapping region re-sources of multiple beams may be bundled to enhance user services/experiences.

The forming of the two or more antenna beams may make use of an antenna field attached to a moving satellite. The overlapping regions may be crossways from a moving direction of the satellite. This may have benefits with respect to Dopplershift compensation at the user devices. In further examples the method may further comprise reusing radio resources in non-overlapping regions. Examples may thereby exploit the spatial separation or spatial orthogonalization of non-overlapping beams. Since one orthogonalization suffices, time, frequency, code or polarization resources may be reused in non-overlapping or orthogonal beams, which may further enhance a system capacity of the communication system. The forming of the two or more antenna beams may comprise tracking the two or more regions with the two or more antenna beams. Examples may enable to track coverage regions from moving platforms, such as satellites or airplanes.

The forming may comprise forming a pattern of multiple partially overlapping beams using orthogonal radio resources in overlapping regions and reproducing the pattern for different geographical regions. Such a pattern may involve repetitive constellation of orthogonalized beam subgroups. Examples may provide an efficient coverage scheme using patterns of overlapping beams. The pattern may be one-dimensional or two- or multi-dimensional in some examples to enable efficient coverage. Moreover, in the overlapping region a multiplicity of adjacent antenna beams may overlap, e.g. two or more beams may overlap. The more beams overlap, the more resources may be made available in the overlapping region.

Furthermore, the assigning may further comprise assigning at least a portion of the radio re-sources dynamically to the antenna beams based on a load in the communication network. Therewith, examples may enable dynamic or adaptive capacity provision in a network suing beamforming.

Another example is a computer program having a program code for performing one of the methods described herein, when the computer program is executed on a computer, a processor, or a programmable hardware component. Yet another example is an apparatus for wireless data communication in a communication system, comprising a beamforming antenna and one or more processing devices configured to perform one of the methods described herein. For example, a satellite may comprise the apparatus.

### Brief description of the Figures

Some examples of apparatuses, methods, and/or computer programs will be described in the following by way of example only, and with reference to the accompanying figures, in which
Fig. 1 shows a block diagram of an example of a method for wireless data communication in a communication system;
Fig. 2 shows a block diagram of an example of an apparatus for wireless data communication in a communication system and an example of a satellite;
Fig. 3 shows a diagram of a frequency reuse plan in an example;
Fig. 4 illustrates an example of illumination areas generated using three orthogonal groups of physical resource blocks;
Fig. 5 illustrates resource distribution and capacities available without overlapping regions;
Fig. 6 shows resource distribution and capacities available with overlapping regions in an example;
Fig. 7 illustrates illumination area in a shifted transverse to a satellite flight direction in an example;
Fig. 8 shows illumination areas with two-dimensional beam displacement in an example, and
Fig. 9 shows a two-dimensional repetition of illumination areas with two-dimensional displacement inline with the example of Fig. 8.

### Detailed Description

Some examples are now described in more detail with reference to the enclosed figures. However, other possible examples are not limited to the features of these examples described in detail. Other examples may include modifications of the features as well as equivalents and alternatives to the features. Furthermore, the terminology used herein to describe certain examples should not be restrictive of further possible examples.

Throughout the description of the figures same or similar reference numerals refer to same or similar elements and/or features, which may be identical or implemented in a modified form while providing the same or a similar function. The thickness of lines, layers and/or areas in the figures may also be exaggerated for clarification.

When two elements A and B are combined using an "or", this is to be understood as disclosing all possible combinations, i.e. only A, only B as well as A and B, unless expressly defined otherwise in the individual case. As an alternative wording for the same combinations, "at least one of A and B" or "A and/or B" may be used. This applies equivalently to combinations of more than two elements.

If a singular form, such as "a", "an" and "the" is used and the use of only a single element is not defined as mandatory either explicitly or implicitly, further examples may also use several elements to implement the same function. If a function is described below as implemented using multiple elements, further examples may implement the same function using a single element or a single processing entity. It is further understood that the terms "include", "including", "comprise" and/or "comprising", when used, describe the presence of the specified features, integers, steps, operations, processes, elements, components and/or a group thereof, but do not exclude the presence or addition of one or more other features, integers, steps, operations, processes, elements, components and/or a group thereof.

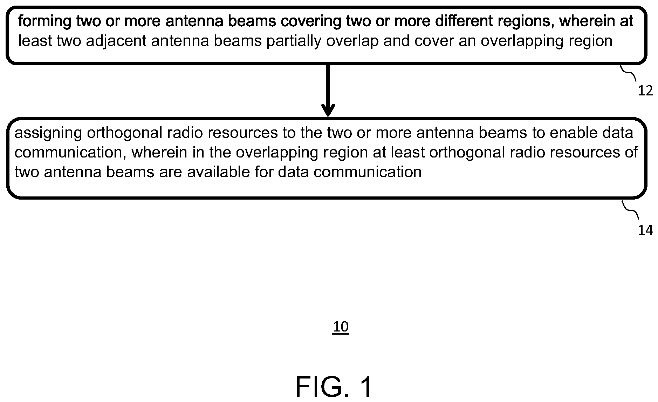

Fig. 1 shows a block diagram of an example of a method 10 for wireless data communication in a communication system. The method 10 comprises forming 12 two or more antenna beams covering two or more different regions, wherein at least two adjacent antenna beams partially overlap and cover an overlapping region. The method 10 further comprises assigning 14 orthogonal radio resources to the two or more antenna beams to enable data communication. In the overlapping region at least orthogonal radio resources of two antenna beams are available for data communication. For example, the method 10 is used in a satellite and/or mobile communication system.

Examples make use of beamforming to generate the antenna beams. Beamforming is a signal processing technique that focuses a transmitted/received radio signal in/from a specific direction, or angle, to improve reception or transmission in that direction. It is commonly used in wireless communication systems to improve signal quality and coverage. In beamforming, multiple antennas or antenna elements work together to create a directed signal beam towards a specific receiver or location. By adjusting the phase and amplitude of the signal at each antenna element individually, the signal can be reinforced in the desired direction while suppressing interference from other directions. In other words, through individual manipulation of the signals per antenna or antenna element and the geometry of the antennas, constructive and destructive superposition of the signals of the antennas or antenna elements can be achieved.

Therewith, directions with increased antenna gain (constructive superposition) and directions with decreased or even no antenna gain (destructive superposition) can be achieved. Transmission and/or reception gain can therefore be made dependent on the phase shift occurring in the radio channel. At least under specific conditions (line-of-sight only, mostly true for satellite-to-ground channels) beams (angular sections of high antenna gain) can be formed and directed. A beamforming antenna therefore comprises multiple antennas or antenna elements. The antennas may correspond to any transmit and/or receive antennas, such as horn antennas, dipole antennas, patch antennas, sector antennas etc. The antennas may be arranged in a defined geometrical setting, such as a uniform array, a linear array, a circular array, a triangular array, a uniform field, a field array, combinations thereof, etc.

Signals transmitted to and/or received from the antennas are phase shifted versions of each other. Depending on the geometry of the antennas, directions of constructive and destructive superposition can be generated making up the beams. For example, analog phase shifters or a Butler matrix may be used with preset or configurable phase relations to generate a grid of beams. Digital beamforming may be used such that the phases of the signals are manipulated digitally, e.g. in the base band. For example, a Discrete Fourier Transformation (DFT) may be used to form a grid of beams. Signals in the antennas paths are then multiplied with DFT coefficient, e.g. with exp(j 2 pi m k / M), in which M is the number of antennas, m is the beam index and k is the antenna element index, further assuming a linear array of antennas. In further examples digital and analog beamforming may be used. It is to be noted that the grids or beam pattern shown in the following are idealized. This representation is used for simplicity reasons.

There are two main types of beamforming: analog beamforming and digital beamforming. Analog beamforming is done at the RF (radio frequency) level using analog circuitry, while digital beamforming is performed using digital signal processing techniques. Beamforming can help increase the range, data rate, and reliability of wireless communication systems by focusing the signal energy where it is needed most, and/or by suppressing interference from certain directions (spatial nulling). It is a key technology in 5G (5^{Th} Generation) mobile networks, Wi-Fi routers (Wireless Fidelity), and other wireless devices to improve performance in challenging environments with obstacles or interference.

Conventionally, beams are used to spatially separate users and enable radio resource re-use in spatially separated regions or areas with different beams. Examples use the beams to purposely generate overlapping regions using the beams. In these regions more radio resources (at least those of two beams) can be made available as compared to non-overlapping regions. At least in some examples, the beams may be generated in a way that there are (theoretically) no non-overlapping region as will be further detailed in the sequel.

As outlined above, orthogonal radio resources may be assigned to the beams. Orthogonal radio resources are radio resources that do not generate or only generate negligible mutual interference. For example, different frequencies, time slots, codes or polarizations may be used in overlapping beams. The orthogonal radio resources may be different subcarriers or physical resource blocks of an orthogonal frequency division multiplexing system and/or different orthogonal codes of a code division multiplexing system.

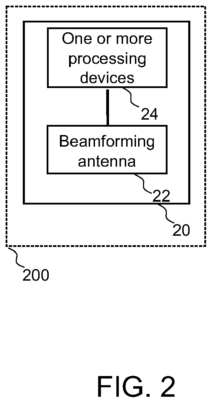

Fig. 2 shows a block diagram of an example of an apparatus 20 for wireless data communication in a communication system and an example of a satellite 200. The apparatus 20 for wireless data communication in a communication system comprises a beamforming antenna and one or more processing devices 24 configured to perform one of the methods described herein. Fig. 2 also illustrates a satellite 200 comprising the apparatus 20. The satellite 200 is shown in dotted line as it is optional from the perspective of the apparatus 20. Likewise, there could be a high altitude platform or an airplane comprising the apparatus 20.

As illustrated in Fig. 2, the respective one or more processing devices 24 are coupled to the respective beamforming antenna 22. The beamforming antenna 22 may serve as interface for communicating in the communication system. The beamforming antenna may correspond to one or more inputs and/or outputs for receiving and/or transmitting information, which may be in digital (bit) values or analog according to a specified code or protocol, within a module, between modules or between modules of different entities. For example, an interface of the beamforming antenna may comprise interface circuitry configured to receive and/or transmit information. In examples the beamforming antenna 22 may comprise any means for obtaining, receiving, transmitting or providing analog or digital signals or information, e.g., any connector, contact, pin, register, input port, output port, conductor, lane, etc., which allows providing or obtaining a signal or information through one or more antenna beams. The beamforming antenna 22 may be configured to communicate (transmit, receive, or both) in a wireless manner and it may be configured to communicate, i.e., transmit and/or receive signals, information with further internal or external components. The beamforming antenna 22 or the apparatus 20 may comprise further components to enable communication in a (mobile) communication system or network, such components may include transceiver (transmitter and/or receiver) components, such as one or more Low-Noise Amplifiers (LNAs), one or more Power-Amplifiers (PAs), one or more duplexers, one or more diplexers, one or more filters or filter circuitry, one or more converters, one or more mixers, accordingly adapted radio frequency components, etc.

The beamforming antenna 22 further comprises one or more antenna elements, which can be used to form one or more antenna beams using phase manipulated signals. The beamforming antenna 22 is a type of antenna technology used in wireless communication systems, especially in the field of antennas for mobile communication and satellite communication.

The one or more processing devices 24 may be implemented using one or more processing units, one or more circuitries, any means for processing, such as a processor, a computer or a programmable hardware component being operable with accordingly adapted software. In other words, the described function of the one or more processing devices 24 may as well be implemented in software, which is then executed on one or more programmable hardware components. Such hardware components may comprise a general-purpose processor, a Digital Signal Processor (DSP), a micro-controller, etc.

In examples a network entity (implemented at a satellite, platform, airplane, etc.) may generate cells of a cellular system and/or the network entity may be in the fixed or stationary part of the network or system. A network entity may correspond to a remote radio head, a transmission point, an access point, a macro cell, a small cell, a micro cell, a pico cell, a femto cell, a metro cell etc. The term small cell may refer to any cell smaller than a macro cell, e.g., a micro cell, a pico cell, a femto cell, or a metro cell. Moreover, a femto cell is considered smaller than a pico cell, which is considered smaller than a micro cell. A network entity can be a wireless interface of a wired network, which enables transmission and reception of radio signals to a communication device. Such a radio signal may comply with radio signals as, for example, standardized by 3GPP (3rd Generation Partnership Project) or, generally, in line with one or more of the above listed systems. Thus, a network entity may be a base station and may correspond to, a NodeB, an eNodeB, an ngNB, a gNB, a BTS (Base Transceiver Station), an access point, all of which may be implemented in a satellite, etc. In case of a moving implementation in a satellite, an airplane, etc. the link towards a core network of the communication system may also be implemented in a wireless manner.

The mobile communication system may hence be cellular. The term cell refers to a coverage area of radio services provided by a transmission point, a remote unit, a remote head, a remote radio head, communication device, network entity or a NodeB, an eNodeB, an ngNB, a gNB, a beam, a satellite, respectively. The terms cell and base station may be used synonymously, a base station may generate multiple cells and it may be implemented in a high-altitude platform, a plane, a drone, a satellite, etc. A wireless communication device, e.g., the communication device, can be registered or associated with at least one cell (e.g., the network entity), e.g., it can be associated to a cell such that data can be exchanged between the network and the mobile in the coverage area of the associated cell using a dedicated channel, connection or link.

In general, the communication device is a device that is capable of communicating wirelessly. In particular, however, the communication device may be a mobile communication device, e.g., a communication device that is suitable for being carried around by a user. For example, the communication device may be a User Terminal (UT) or User Equipment (UE) within the meaning of the respective communication standards being used for mobile communication. For example, the communication device may be a mobile phone, such as a smartphone, or another type of mobile communication device, such as a smartwatch, a laptop computer, a tablet computer, or autonomous augmented-reality glasses. The communication device may be in a vehicle, a car, a bus, a truck, a construction and/or agricultural machinery, a train, an airplane, a boat, a ship, a cruise ship, an Internet of Things (IoT) device, a logistics application, etc. For example, the communication device and the network entity may be configured to communicate in a cellular mobile communication system. Accordingly, the communication device and the network entity may be configured to communicate in a cellular mobile communication system, for example in a Sub-6GHz-based cellular mobile communication system (covering frequency bands between 400 MHz and, in the meantime, 7 GHz), in a mmWave-based cellular mobile communication system (covering frequency bands between 24 GHz and 71 GHz) or in the so-called mid-bands (covering frequency bands between 7 GHz and 24 GHz). For example, the communication device and the network entity may be configured to communicate in a mobile communication system/cellular mobile communication system.

In general, the mobile communication system may, for example, correspond to one of the Third Generation Partnership Project (3GPP)-standardized mobile communication networks, where the term mobile communication system is used synonymously to mobile communication network. The mobile communication system may correspond to, for example, a 6^{th} Generation system (6G), a 5th Generation system (5G), a New Radio (NR) system, a Long-Term Evolution (LTE), an LTE-Advanced (LTE-A), High Speed Packet Access (HSPA), a Universal Mobile Telecommunication System (UMTS) or a UMTS Terrestrial Radio Access Network (UTRAN), an evolved-UTRAN (e-UTRAN), a Global System for Mobile communication (GSM) or Enhanced Data rates for GSM Evolution (EDGE) network, a GSM/EDGE Radio Access Network (GERAN), or mobile communication networks with different standards, for example, generally an Orthogonal Frequency Division Multiple Access (OFDMA) network, a Time Division Multiple Access (TDMA) network, a Code Division Multiple Access (CDMA) network, a Wideband-CDMA (WCDMA) network, a Frequency Division Multiple Access (FDMA) network, a Spatial Division Multiple Access (SDMA) network, etc.

Within a radio cell of a terrestrial antenna array, even small spatial distances between two terminal devices are sufficient to keep the interference between their two beams to a minimum. This means that the beams can all use the same frequency spectrum without interfering with each other. Satellite beams that are intended to supply neighboring illumination or coverage regions overlap at the edges. If they were to use the same frequency band, they would interfere with each other due to the interference generated. For this reason, the available frequency band is divided into several sub-bands. Neighboring beams use different sub-bands and thus avoid mutual interference.

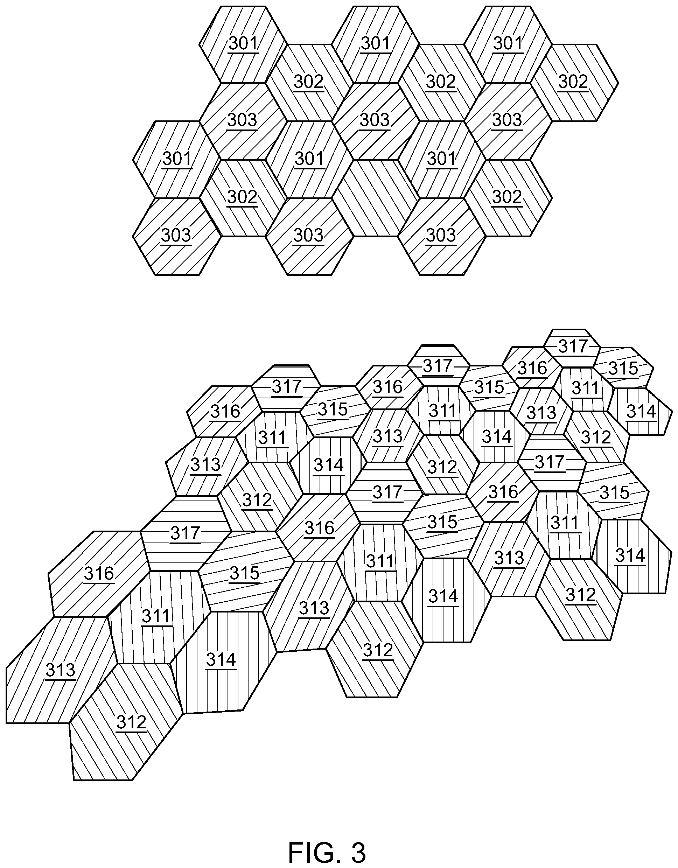

Fig. 3 shows a diagram of a frequency reuse plan in an example. At the top Fig. 3 shows a hexagonal cell structure in which three frequency carriers 301, 302, 303 are reused in a way that there are no direct neighbor cells using the same frequency. At the bottom Fig. 3 shows a reuse pattern for seven frequency carriers 311, 312, 313, 314, 315, 316, and 317. Again, it is a repetitive pattern in which a certain frequency is only re-used after a spacing of two intermediate cells. The re-use patterns can be characterized by parameter C, with C=3 (top) and C=7 sub-bands or frequency carriers (bottom). Similar re-use patterns, also with different values for C, are already known from GSM for interference avoidance between neighboring radio cells. With other interference avoidance measures, such as CDMA for UMTS, a re-use factor of C=1 is also possible, because orthogonalization is achieved in a different domain. Further details can be found in
http://www.wirelesscommunication.nl/reference/chaptr04/cellplan/reuse.htm .

The conventional frequency reuse procedures are characterized by the fact that radio resources are assigned exclusively to the beams and their illumination regions on the ground. This allocation is independent of the temporal distribution of the traffic volume of the terminal devices in the various coverage regions. In the event of high utilization in one illumination region, the resources of the neighboring illumination region cannot be used. This limits the overall throughput or utilization of, e.g., a satellite. In examples a different concept is used for the formation of the beams and the allocation of radio resources to the beams. Using the overlapping regions in which orthogonal radio resources are allocated to the overlapping beams, enables a more flexible allocation of resources to the terminals on the ground and thus an overall higher utilization of a satellite. It is suitable for mobile radio applications as it allows uninterrupted coverage of all illumination regions. The computational effort for this method is low, as the direction of the beams is independent of the traffic volume on the ground and therefore the beamforming parameters do not have to be dynamically changed individually. A joint adjustment of all beamforming parameters is of course still necessary so that the illumination regions on the ground do not shift despite the satellite's flight movement. However, this is considered irrelevant in the context of the examples described here and is therefore not discussed further. In the method 10 the forming of the two or more antenna beams may comprise tracking the two or more regions with the two or more antenna beams.

For example, the non-terrestrial networks (NTN) standardized in 3GPP from Release 17 use the same radio interface as terrestrial 5G NR mobile radio systems. The radio interface of both 5G NR and LTE is based on the OFDM (Orthogonal Frequency Division Multiplex) multi-carrier modulation method. A frequency band is divided into a large number of orthogonal subcarriers. For example, with 5G NR, a 5MHz wide band (after deduction of guard intervals at the band edges and for numerology µ=0) is divided into 300 subcarriers at intervals of 15kHz. In each case, 12 neighboring subcarriers form the smallest unit that can be assigned to a terminal device by the base station as a so-called Physical Resource Block (PRB). The 5MHz wide band is therefore divided into 300 / 12 = 25 PRBs, i.e. 25 and thus considerably more sub-bands than for the conventional reuse schemes described above.

It is already known from O-RAN (Open Radio Access Networks) that LTE and 5G NR radio signals can be emitted from phased array antennas and that one or more beams can be emitted in different directions in each PRB. The directions of these beams in each PRB can be defined independently of the directions of the beams in all other PRBs. The reuse patterns shown in Fig. 3 could be generated with C = 3 or C = 7 subbands.

The reuse patterns shown in Fig. 3 are characterized by the fact that the illumination regions of the individual beams do not overlap. This can be achieved by using different phase shifts for the beams that use the respective PRBs (thereby pointing them in different directions). This enables simultaneous communication in the beams. The main directions of the beams can be steered by the phase shifts, which can also be steered in a way, that the respective overlapping regions result. One finding of examples described here is to move the beams relative to each other so that their illumination regions partially overlap.

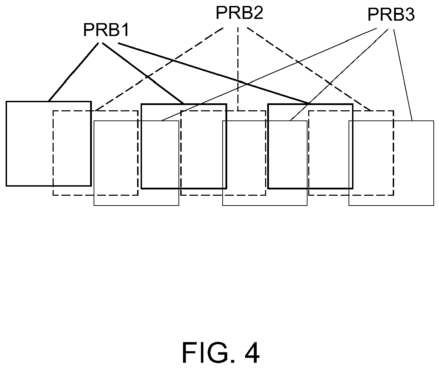

Some examples use a one-dimensional displacement. Fig. 4 shows this for a one-dimensional displacement with three PRBs, PRB1, PRB2, and PRB 3. In Fig. 4 illumination areas of 3 PRBs with 3 beams, each with one-dimensional beam displacement, is shown. Fig. 4 illustrates an example of illumination areas generated using three orthogonal groups of physical resource blocks. As can be seen in Fig. 4 each PRB is used in three non-overlapping regions. The method 10 in this example further comprises reusing radio re-sources in non-overlapping regions. However, the regions generated by the beams generate overlapping regions of PRB 1 and PRB2, PRB2 and PRB3, and PRB3 and PRB 1. A terminal device can receive several PRBs in the overlapping areas. In the example shown in Fig. 4 there is no mutual interference, as the overlapping PRBs are orthogonal to each other due to the OFDM principle. For the sake of clarity, only 3 PRBs are shown in Fig. 4. In principle, however, it would be possible to use all PRBs of an LTE or 5G NR frequency band in this way.

As can be further seen from Fig. 4 the overlap between two adjacent beams in this example is about half of a coverage region of a beam. This leads to a scenario in which one each coverage region of a beam overlaps with one half of its two neighbor or adjacent beams. However, the overlapping region can be different in other examples. For example, it could be even larger so in the middle of a coverage region of one beam there would be a region in which three beams overlap. In the overlapping region a multiplicity of adj acent antenna beams may overlap. In the present example the pattern is one-dimensional, however it may also be two-dimensional or multi-dimensional and hence a plurality of beams may overlap in the overlapping region.

In other examples it could be less, so in the middle of a beam there would a region without any overlapping. For example, at least a quarter of a region covered by an antenna beam of a first beam subgroup (e.g. PRB1 in Fig. 4) is overlapping with a region covered by an adjacent antenna beam of a second beam subgroup (PRB2 in Fig. 4). The size of the overlapping region may be larger than a quarter of the size of a region covered an antenna beam. Moreover, as outlined above, the method 10 further comprises communicating with an end user in the overlapping region simultaneously using the adjacent antenna beams and the orthogonal radio resources, e.g. PRB1 and PRB2 in the respective overlapping region.

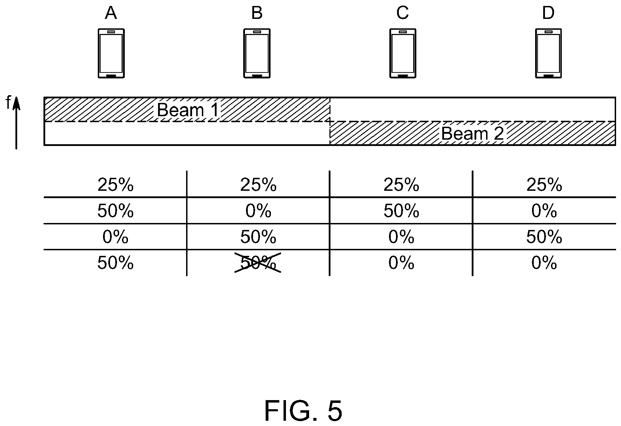

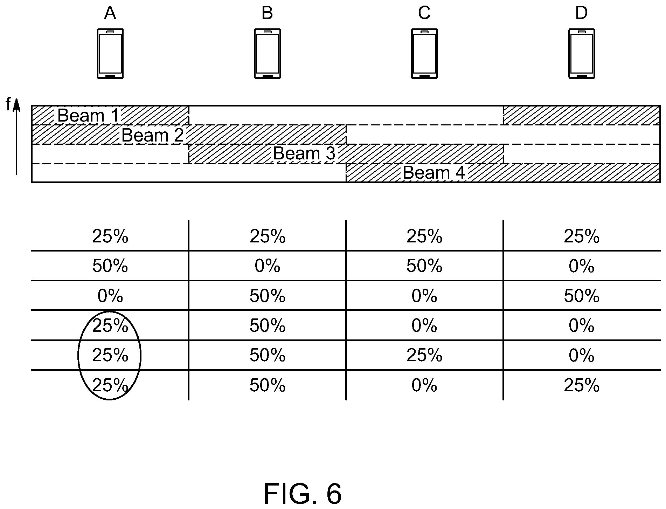

The effect of this shift on the allocation of resources to the end devices is explained using a more detailed example to simplify matters. The two images in Fig. 5 and 6 show four end devices (A, B, C, D) distributed along a geographical line. Fig. 5 illustrates resource distribution and capacities available without overlapping regions and Fig. 6 shows resource distribution and capacities available with overlapping regions in an example.

Fig. 5 shows the conventional approach: The available frequency band is divided into two orthogonal sub-bands (C=2); the upper sub-band is assigned to the left beam, Beam 1, the lower one to the right beam, Beam 2. The two terminal devices within a beam share their sub-band (A, B in Beam 1, C, D in Beam 2). It is not possible to transfer resources between the beam regions. The table below the image shows some examples of possible resource allocations. The last line shows the disadvantage of the conventional approach: Although the total traffic volume of the two left-hand terminals A and B together is 100%, the unused lower sub-band in the right-hand coverage region cannot be used on the left, and consequently the crossed-out terminal in the left-hand coverage region cannot be served; this reduces the total throughput of the satellite to 50%.

Fig. 6 shows another example when using the method 10. The same frequency band is divided into four orthogonal sub-bands (C=4), each of which has only half the bandwidth compared to the conventional approach in Fig. 5. The beams (Beam 1, Beam 2, Beam 3, Beam 4) have the same spatial width as in the conventional case, but the centers of the beams in the individual sub-bands are shifted relative to each other by half the beam diameter. Two end devices still share one sub-band (e.g. A and B share the sub-band of Beam 2), and each end device has access to two sub-bands (A has access to the two sub-bands of Beam 1 and Beam 2). This means that each individual end device can be allocated a maximum of the same number of resources as in the conventional case. But the radio resource scheduler can assign unused sub-band radio bandwidth of end devices C and D from the overlapping Beams 1, 2 and 3 to the two end devices A and B. This means, for example, that the two end devices A and B can use 3/4 (Beams 1, 2, 3) of the entire bandwidth together, as shown in the three lower rows of the table at the bottom, whereas in the conventional approach they were limited to half the bandwidth.

Consequently, the concept according to the example offers more possibilities to adapt the resource allocation to the current traffic volume and thus achieves a higher utilization of the resources.

As described above, the OFDM modulation method allows the frequency band to be divided into a large number of PRBs or sub-bands. With more than 4 sub-bands as in Fig. 6, there are correspondingly more options for distributing the traffic load across the sub-bands and thus between different terminal devices. This further improves the utilization and overall throughput of the satellite. With C sub-bands, the two left terminals in the above example could together use up to (C-1) / C of all sub-bands.

However, the interference situation between the beams is not adversely affected by examples: The beam diameter and the re-use pattern remain unchanged within the individual frequency groups. This means that the interference between the beams within a frequency group does not change compared to the conventional method. And the beams of different frequency groups do not interfere with each other despite the spatial overlap, as the individual subcarriers are orthogonal to each other due to the OFDM method.

An overlapping two-dimensional shift of the illumination regions is also described below. In some situations, however, a one-dimensional shift might be advantageous: The movement of the satellite causes a Doppler shift in the radio signal. This depends on the location of the end device in the direction of movement of the satellite. In 3GPP Rel. 17 it is specified that the end device compensates for this Doppler shift. Alternatively, it is also conceivable that the satellite compensates for the Doppler shift. Compensation must then always be carried out uniformly for all end devices in an illumination region. The compensation is (almost) identical for all illumination regions transverse to the direction of flight of the satellite, but different for illumination regions along the direction of flight. With a two-dimensional shift of the illumination regions as described below, illumination regions with different Doppler compensation are also superimposed in the direction of flight. This could lead to reception problems in the terminal devices. In this case, it is therefore advisable to dispense with a shift in the direction of flight. With regard to mobile radio protocols, each row of coverage regions across the direction of flight can be treated as a radio cell. The forming of the two or more antenna beams makes use of an antenna field attached to a moving satellite. The overlapping regions may be crossways/transverse from a moving direction of the satellite.

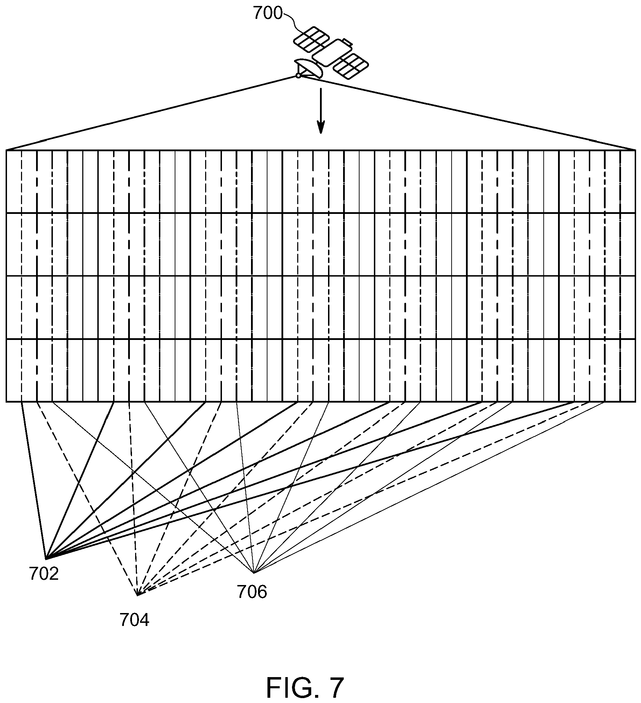

Fig. 7 illustrates illumination area in a shifted transverse to a satellite flight direction in an example. Fig. 7 shows a satellite 700 moving from top to bottom. The satellite generates six subgroups of beams of which three are referenced in Fig. 7 as 702, 704, and 706. As can be seen in Fig. 7 there is a repetitive pattern of 6 Beams, which use orthogonal radio resources, and which mutually overlap. The illumination or coverage areas are shifted transverse/crossways to the satellite flight direction. There is no overlapping in the direction of movement of the satellite 700. The forming 12 hence comprises forming a pattern of multiple partially overlapping beams using orthogonal radio resources in overlapping regions and reproducing the pattern for different geographical regions.

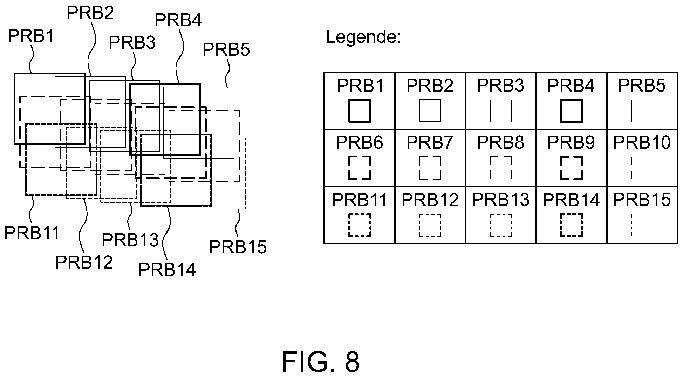

Some further examples may use two-dimensional displacement. The illumination areas of the beams can be shifted against each other not only in one spatial dimension as described above, but also in two spatial dimensions. This is shown in Fig. 8. Illumination areas are illustrated with two-dimensional beam displacement in an example. Fig. 8 shows 15 coverage regions on the left and their assignment to 15 PRBs on the right. For reasons of clarity in Fig. 8 on the left only the top row (PRB 1-5) and bottom row (PRB1 1-15) are referenced. In a similar manner, the middle row of beams uses PRB 6-10.

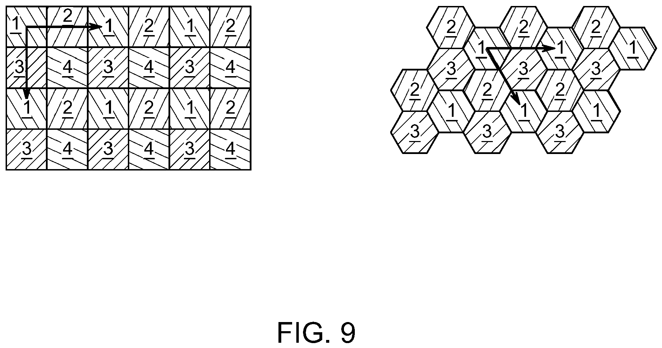

For the sake of clarity, Fig. 8 shows only a single beam from each PRB. Of course, each PRB can be used in several beams. To do this, a beam (PRB) pattern can be repeated both horizontally and vertically according to a re-use pattern. Fig. 9 shows a two-dimensional repetition of illumination areas with two-dimensional displacement inline with the example of Fig. 8. If the horizontal and vertical repetition axes are perpendicular to each other, a resulting grid corresponds to a reuse factor of 4, which is shown in Fig. 9 on the left. The PRBs are indicated by numbers 1, 2, 3 and 4. Alternatively, the displacement axes could also be at an angle of 60° to each other. This results in a grid corresponding to a reuse factor 3 as shown in Fig. 9 on the right, in which the PRBs are indicated by numbers 1, 2, and 3.

Examples may hence improve the use of resources and increase the utilization of a satellite as described above. A change in the end devices is not necessary to achieve the benefits of the beam-overlap with orthogonal radio resources. Furthermore, the coverage areas of overlapping beams with different PRBs can be considered together as one radio cell. This radio cell is larger than the individual beams in the conventional case. In the conventional case, beams with the same PRB form a grid, whose edge lengths are determined by the dimensions of the beams. In examples of the method 10, the displacements of the illumination/coverage areas can be selected as desired and thus re-use grids with edge lengths other than the dimensions of the beams can be generated. This offers more flexibility in antenna design.

In examples, a multi-carrier modulation method may be used, in particular OFDM (with orthogonal subcarriers) or CDMA with orthogonal codes. In the overlapping regions, beams with different subcarriers, PRBs, or sub-bands may be used.

In further examples the assigning may further comprise assigning at least a portion of the radio resources dynamically to the antenna beams based on a load in the communication network. With respect to Figs. 7, 8, and 9 there may be a subgroup of radio resource (e.g. PRBs or codes), which are used to orthogonalize the beams. However, there may be more radio resources available, and the others may be dynamically assigned to the beams, e.g. based on a demand or load in the system. Thereby, a higher flexibility with respect local transmission capacities may be achieved.

The aspects and features described in relation to a particular one of the previous examples may also be combined with one or more of the further examples to replace an identical or similar feature of that further example or to additionally introduce the features into the further example.

Examples may further be or relate to a (computer) program including a program code to execute one or more of the above methods when the program is executed on a computer, processor or other programmable hardware component. Thus, steps, operations or processes of different ones of the methods described above may also be executed by programmed computers, processors or other programmable hardware components. Examples may also cover program storage devices, such as digital data storage media, which are machine-, processor- or computer-readable and encode and/or contain machine-executable, processor-executable or computer-executable programs and instructions. Program storage devices may include or be digital storage devices, magnetic storage media such as magnetic disks and magnetic tapes, hard disk drives, or optically readable digital data storage media, for example. Other examples may also include computers, processors, control units, (field) programmable logic arrays ((F)PLAs), (field) programmable gate arrays ((F)PGAs), graphics processor units (GPU), application-specific integrated circuits (ASICs), integrated circuits (ICs) or system-on-a-chip (SoCs) systems programmed to execute the steps of the methods described above.

It is further understood that the disclosure of several steps, processes, operations or functions disclosed in the description or claims shall not be construed to imply that these operations are necessarily dependent on the order described, unless explicitly stated in the individual case or necessary for technical reasons. Therefore, the previous description does not limit the execution of several steps or functions to a certain order. Furthermore, in further examples, a single step, function, process or operation may include and/or be broken up into several sub-steps, - functions, -processes or -operations.

If some aspects have been described in relation to a device or system, these aspects should also be understood as a description of the corresponding method. For example, a block, device or functional aspect of the device or system may correspond to a feature, such as a method step, of the corresponding method. Accordingly, aspects described in relation to a method shall also be understood as a description of a corresponding block, a corresponding element, a property or a functional feature of a corresponding device or a corresponding system.

The following claims are hereby incorporated in the detailed description, wherein each claim may stand on its own as a separate example. It should also be noted that although in the claims a dependent claim refers to a particular combination with one or more other claims, other examples may also include a combination of the dependent claim with the subject matter of any other dependent or independent claim. Such combinations are hereby explicitly proposed, unless it is stated in the individual case that a particular combination is not intended.

Furthermore, features of a claim should also be included for any other independent claim, even if that claim is not directly defined as dependent on that other independent claim.

## Claims

1. A method (10) for wireless data communication in a communication system, the method (10) comprising
forming (12) two or more antenna beams covering two or more different regions, wherein at least two adjacent antenna beams partially overlap and cover an overlapping region; and
assigning (14) orthogonal radio resources to the two or more antenna beams to enable data communication,
wherein in the overlapping region at least orthogonal radio resources of two antenna beams are available for data communication.

2. The method (10) of claim 1 being used in a satellite communication system.

3. The method (10) of one of the claims 1 or 2, wherein the orthogonal radio resources are different subcarriers or physical resource blocks of an orthogonal frequency division multiplexing system and/or different orthogonal codes of a code division multiplexing system.

4. The method (10) of one of the claims 1 to 3, wherein at least a quarter of a region covered by an antenna beam of a first beam subgroup is overlapping with a region covered by an adjacent antenna beam of a second beam subgroup.

5. The method (10) of one of the claims 1 to 4, further comprising communicating with an end user in the overlapping region simultaneously using the adjacent antenna beams and the orthogonal radio resources.

6. The method (10) of one of the claims 1 to 5, wherein the forming (12) of the two or more antenna beams makes use of an antenna field attached to a moving satellite (700), wherein the overlapping regions are crossways from a moving direction of the satellite (700).

7. The method (10) of one of the claims 1 to 6, further comprising reusing radio resources in non-overlapping regions.

8. The method (10) of one of the claims 1 to 7, wherein the forming (12) of the two or more antenna beams comprises tracking the two or more regions with the two or more antenna beams.

9. The method (10) of one of the claims 1 to 8, wherein the forming (12) comprises forming a pattern of multiple partially overlapping beams using orthogonal radio resources in overlapping regions and reproducing the pattern for different geographical regions.

10. The method (10) of claim 9, wherein the pattern is one-dimensional or two-dimensional.

11. The method (10) of one of the claims 1 to 10, wherein in the overlapping region a multiplicity of adjacent antenna beams overlap.

12. The method (10) of one of the claims 1 to 11, wherein the assigning (14) further comprises assigning at least a portion of the radio resources dynamically to the antenna beams based on a load in the communication network.

13. A computer program having a program code for performing one of the methods (10) of one of the claims 1 to 12, when the computer program is executed on a computer, a processor, or a programmable hardware component.

14. An apparatus (20) for wireless data communication in a communication system, comprising a beamforming antenna (22) and one or more processing devices (24) configured to perform one of the methods (10) of one of the claims 1 to 12.

15. A satellite (700) comprising the apparatus (20) of claim 14.

## Amended claims

### Amended claims in accordance with Rule 137(2) EPC.

1. A method (10) for wireless data communication in a communication system, the method (10) comprising
forming (12) two or more antenna beams covering two or more different regions, wherein at least two adjacent antenna beams partially overlap and cover an overlapping region; and
assigning (14) orthogonal radio resources to the two or more antenna beams to enable data communication,
wherein in the overlapping region at least orthogonal radio resources of two antenna beams are available for data communication,
further comprising communicating with an end user in the overlapping region simultaneously using the adjacent antenna beams and the orthogonal radio resources.

2. The method (10) of claim 1 being used in a satellite communication system.

3. The method (10) of one of the claims 1 or 2, wherein the orthogonal radio resources are different subcarriers or physical resource blocks of an orthogonal frequency division multiplexing system and/or different orthogonal codes of a code division multiplexing system.

4. The method (10) of one of the claims 1 to 3, wherein at least a quarter of a region covered by an antenna beam of a first beam subgroup is overlapping with a region covered by an adjacent antenna beam of a second beam subgroup.

5. The method (10) of one of the claims 1 to 4, wherein the forming (12) of the two or more antenna beams makes use of an antenna field attached to a moving satellite (700), wherein the overlapping regions are crossways from a moving direction of the satellite (700).

6. The method (10) of one of the claims 1 to 5, further comprising reusing radio resources in non-overlapping regions.

7. The method (10) of one of the claims 1 to 6, wherein the forming (12) of the two or more antenna beams comprises tracking the two or more regions with the two or more antenna beams.

8. The method (10) of one of the claims 1 to 7, wherein the forming (12) comprises forming a pattern of multiple partially overlapping beams using orthogonal radio resources in overlapping regions and reproducing the pattern for different geographical regions.

9. The method (10) of claim 8, wherein the pattern is one-dimensional or two-dimensional.

10. The method (10) of one of the claims 1 to 9, wherein in the overlapping region a multiplicity of adjacent antenna beams overlap.

11. The method (10) of one of the claims 1 to 10, wherein the assigning (14) further comprises assigning at least a portion of the radio resources dynamically to the antenna beams based on a load in the communication network.

12. A computer program having a program code for performing one of the methods (10) of one of the claims 1 to 11, when the computer program is executed on a computer, a processor, or a programmable hardware component.

13. An apparatus (20) for wireless data communication in a communication system, comprising a beamforming antenna (22) and one or more processing devices (24) configured to perform one of the methods (10) of one of the claims 1 to 11.

14. A satellite (700) comprising the apparatus (20) of claim 13.
